# EUROPEAN PATENT SPECIFICATION

(11) **EP 1 730 417 B1**
(45) Date of publication and mention of the grant of the patent: **05.01.2011**
(21) Application number: 05731073.2
(22) Date of filing: 24.03.2005
(51) Int. Cl.: F16F 7/08, F16D 49/08

(54) **SYSTEM COMPRISING MAGNETICALLY ACTUATED ROTARY MOTION CONTROL DEVICE**
SYSTEM MIT MAGNETISCH BETÄTIGTER VORRICHTUNG ZUR DREHBEWEGUNGSSTEUERUNG
SYSTEME POURVU D'UN DISPOSITIF DE COMMANDE DE MOUVEMENT ROTATIF A ACTIONNEMENT MAGNETIQUE

(30) Priority: 25.03.2004 US 556257 P
(43) Date of publication of application: 13.12.2006
(73) Proprietor: LORD CORPORATION, Cary, NC 27512-8012 (US)
(72) Inventor: CARLSON, J., David, Cary, NC 27511 (US); WILDER, Richard, Moncure, NC 27559 (US)
(74) Representative: Dunlop, Brian Kenneth Charles
(86) International application number: PCT/US2005/009773
(87) International publication number: WO 2005/095819

(56) References cited:
- EP-A- 0 105 806
- US-A- 4 239 095
- US-A- 6 053 291
- US-A1- 2003 075 401

## Description

### Field of the Invention

The present invention relates to magnetically actuated motion control device. In particular the present invention relates to magnetically actuated motion control devices that vary contact pressure between a first member and a second member in accordance with a generated magnetic field.

### Background and Related Art

Magnetically actuated motion control devices such as magnetically controlled dampers or struts provide motion control, e.g., damping that is controlled by the magnitude of an applied magnetic field. Much of the work in the area of magnetically controlled dampers has focused on either electrorheological (ER) or magnetorheological (MR) dampers. The principle underlying both of these types of damping devices is that particular fluids change viscosity in proportion to an applied electric or magnetic field. Thus, the damping force achievable with the fluid can be controlled by controlling the applied field. Examples of ER and MR dampers are discussed in U.S. Patent Nos. 5,018,606 and 5,384,330, respectively.

MR fluids have high yield strengths and viscosities, and therefore are capable of generating greater damping forces than ER fluids. In addition, MR fluids are activated by easily produced magnetic fields with simple low voltage electromagnetic coils. As a result, dampers employing MR fluids have become preferred over ER dampers.

Because ER and MR fluid dampers still involve fluid damping, the dampers must be manufactured with precise valving and seals. In particular, such dampers typically require a dynamic seal and a compliant containment member which are not particularly easy to manufacture and assemble. Further, the fluid type dampers can have significant "off-state" forces which can further complicate manufacture and assembly. Off-state forces refer to those forces at work in the damper when the damper is not energized.

The foregoing illustrates limitations known to exist in present devices and methods. Thus, it is apparent that it would be advantageous to provide an alternative directed to overcoming one or more of the limitations set forth above. Accordingly, a suitable alternative is provided including features more fully disclosed hereinafter.

### Summary Of The Disclosure

EP-A-0105806 describes an electromagnetic clutch having the features of the precharacterising clause of claim 1 as well as the features or method steps of the precharacterising clause of method claim 8. The invention includes a device as claimed in claim 1 and a method as claimed in claim 8. Additional features of the device according to the invention are disclosed in the dependent product claims 2 to 7.

### Brief Description Of The Drawings

The objects and advantages of the invention will be understood by reading the following detailed description in conjunction with the drawings in which:
FIG. 1A-B shows a device which is not an embodiment of the invention.
FIG.2 is a side schematic illustration of an embodiment of the present invention used as a rotary brake in a force feedback steering wheel.
FIG.3 is a schematic side sectional illustration of a computer pointing device employing an embodiment of the present invention as rotary brakes.
FIG.4 is a schematic side sectional illustration of an active force feedback steering wheel employing an embodiment of the present invention as a brake.
FIG.5A-D show embodiments of the invention.
FIG.6A-D show embodiments of the invention.
FIG.7A-C show embodiments of the invention.
FIG. 8A-B show embodiments of the invention.
FIG. 9A-B show embodiments of the invention.
FIG. 10A-C show embodiments of the invention.
FIG. 11A-D show embodiments of the invention.
FIG. 12A-F show embodiments of the invention.

### Detailed Description Of The Exemplary Embodiments

For a better understanding of the invention, the following detailed description refers to the accompanying drawings, wherein exemplary embodiments of the present invention are illustrated and described.

The present invention relates to a magnetically actuated alternative to traditional MR fluid motion control devices. A magnetically actuated motion control device according to the present invention can be embodied as linear or rotary dampers, brakes, lockable struts or position holding devices. The invention contains no MR fluid, yet provides a variable level of coulombic or friction damping that is controlled by the magnitude of the applied magnetic field.

In contrast to MR or ER fluid devices, a magnetically actuated motion control device according to the present invention is simple to manufacture and relatively low cost. A magnetically actuated motion control device according to the present invention also allows for very loose mechanical tolerances and fit between components. In addition, a magnetically actuated motion control device according to the present invention does not require a dynamic seal or a compliant containment member as does a fluid type damper, and is therefore relatively easy to manufacture and assemble. Further, a magnetically actuated motion control device according to the present invention has particularly low off-state forces, which provide for a wide dynamic range between the off-state and a maximum damping force.

Preferably the inner surface of the first member housing circular band squeezes against the outer surface of the second member with a normal force that is approximately proportional to the magnitude of the applied magnetic field. Thus, the band acts squeezes the second member to resist relative movement between the housing and the second member. Generally, the magnitude of the applied magnetic field is proportional to the electric current supplied to the coil. The damping force thus depends on the coefficient of friction between the inner surface of the housing and the outer surface of the second member and the normal force between these surfaces, which is dependent on the magnetic field produced by running current through the coils.

The invention allows for the accommodation of very loose mechanical tolerances or fit between the housing and the second member. Because the present invention does not require a dynamic seal or compliant containment member, it offers particularly low off-state forces and is simple to manufacture and assemble.

The present invention is particularly suitable for making low-cost, high-volume dampers. Other applications for magnetically actuated motion control devices according to the present invention include rotary brakes for controlling mechanical motions inside equipment such as copiers or printers, e.g., paper feed mechanisms. Additional applications for magnetically actuated motion control devices according to the present invention include dampers for use as semi-active control elements. Magnetically actuated motion control devices according to the present invention can also be used as latching or locking mechanisms for doors. Still other applications include exercise equipment, rehabilitation equipment, joysticks, control knob wheels, seismic structural control dampers, avionics semi-active control devices, machine tool fixturing devices, doors in automobiles, door hinges and doors in vehicles, motion control in automobiles etc. Magnetically actuated motion control devices according to the present invention can also be used in the area of haptics. The field of haptics includes devices used in computer peripherals such as force-feedback steering wheels, control knobs, programmable detents, programmable endstops, computer pointing devices and joysticks used with games and other software. This field also includes industrial force feedback mechanisms such as steering wheels on steer-by-wire vehicles and rotating instrument control knobs.

Yet another application is to use embodiments of the invention in conjunction with pneumatic and hydraulic actuators to enable precision position and velocity control. The invention includes a method of controlling relative motion between a housing and a second member with a magnetically actuated circular band finger. Current flowing through coils 177 creates a magnetic field that draws the circular band finger 187 in toward the second member 181. For this purpose, the housing circular band finger 187 is formed of a material which will be attracted by the magnetic field. Examples include, but are not limited to, steels and other iron alloys. The amount of current flowing through the coils 177 is generally directly proportional to the magnitude of the magnetic field generated. Thus, control of the electric current flowing through the coils 177 can be used to control the normal or pressing force between the inner surface of the housing circular band finger 187 and the outer surface of the second member 181, thereby controlling the damping effect of the damper.

In some applications of the invention it is desirable to have the magnetic field, and therefore the damping force, applied most of the time with only short instances of turning the damping off. This can be accomplished by adding one or more permanent magnets to the system. A permanent magnet can be used in the damper so that the damper is in its on-state and the housing circular band pressing against the second member when no current is applied to the electromagnetic coil. The electro-magnetic coil serves to cancel the field of the permanent magnet as current is applied to progressively turn the damper off.

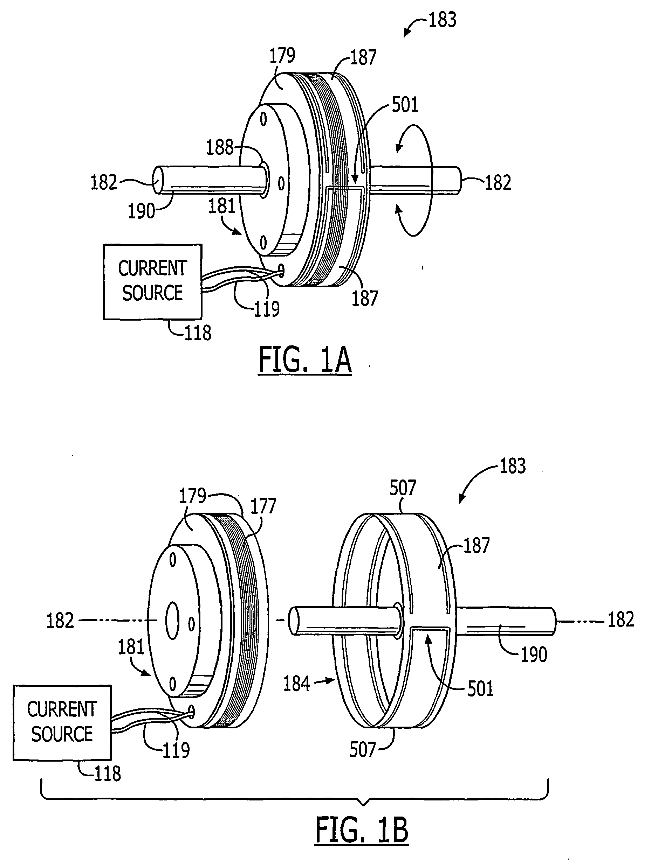

A motion control device, which is not an embodiment of the invention, is illustrated in FIG.1A-B. FIG.1A shows an assembled example of a rotational embodiment, with portions broken away to show some interior elements. FIG.1B shows the embodiment shown in FIG.1A partially disassembled. In this embodiment a coil 177 wound around a center steel bobbin 179 forms a circular stator 181. The stator 181 is positioned within a cavity 184 defined by, and for rotation relative to, a housing 183. The highly flexible circular band 187 of housing 183 allow contact between the stator 181 and the housing circular band 187 when the magnetic field is energized. Bearings 188 are included in the stator 181 to support a shaft 190 with which the housing 183 rotates. Bearings 188 allow the circular housing and shaft 190 to rotate around circular stator 181. As shown in FIG. 1B second member circular stator 181 is received in the cavity 184 between the outer perimeter 507 of the first housing member and the inner shaft 190. As shown in FIG.1A, the housing encircles the stator 181 received in the cavity around the shaft 190 with the circular band 187 having circular finger band free end 501. The flexible circular band 187 is movable into frictional contact with the outer circumference surface of circular stator 181 when a current from current source 118 generates a magnetic field with coil 177. The magnetic field generator of the circular stator 181 with the bobbin and wound coil generates a magnetic field that pulls the circular band 187 inward and into frictional contact to produce frictional damping of the relative rotation between the housing and the stator.

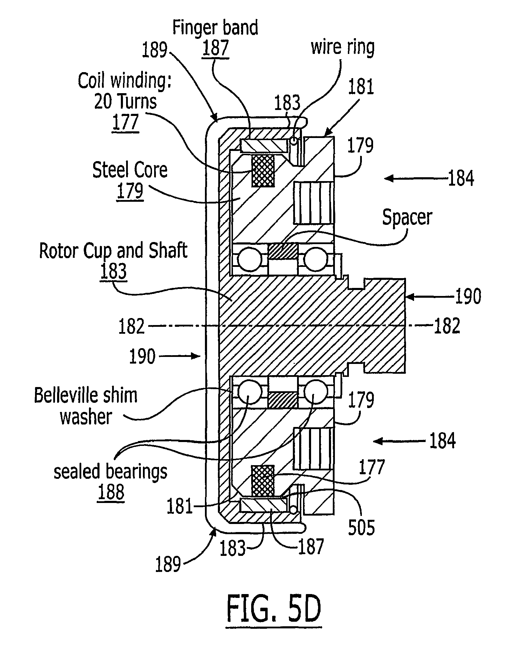

A damper of the present invention generates strong coulombic pressing forces when the outer surface of the magnetically active portion of the second member of the stator makes direct contact with the inner surface of the steel housing circular band. In some applications of the present invention, it is desirable to place a layer of acoustic damping material or acoustic foam 189 around the outside of the housing as seen on the exemplary device shown in FIG.5D. Such an acoustically insulating material 189 will serve to attenuate any high frequency squeaking, rubbing or clanking sounds that may occur due to a metal housing member moving against a metal second member. The desirability of such added acoustic material depends on a number of factors, including: the actual thickness of the housing; the resonant characteristics of the housing; the looseness of the fit between the housing and the second member, and the alignment of the parts during application of the device. Lubricant (grease or oil) can also be added so that the parts of the device slide smoothly relative to each other in the off-state. Suitable acoustic material 189 will be readily apparent to one of ordinary skill in the art.

A similar quieting effect can be achieved by adding an intermediary friction increasing layer to the rubbing surfaces of the second member or stator, or the inner surfaces of the housing circular band. Examples of such materials may be a thin polymeric layer such as polyethylene or nylon, or a composite friction material such as that typically used in vehicle clutches and brakes. Such a friction layer eliminates metal to metal contact and reduces long term wear. However, the presence of such layer of friction material will in general make the magnetic circuit less efficient. Unless the friction material has a high permeability like low carbon steel it increases the reluctance of the magnetic circuit dramatically and lowers the amount of damping force when the damper is in the on-state.

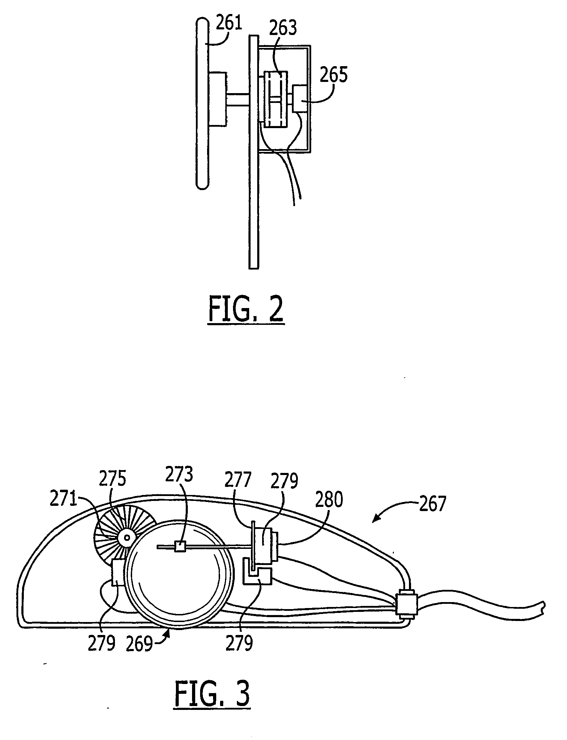

Within the invention, a magnetically controlled damper can further include an integrated position sensor. Exemplary embodiments of a damper including a position sensor according to the present invention are shown in FIG.2-4, 10-11, preferably a rotary position sensor is utilized, such as a rotary potentiometer or a rotary optical encoder, with the rotational sensor mounted to sense a positional characteristic of a rotatable member of the device relative to a stationary non-rotatable member of the device to provide relative rotational information of the rotary motion control device. In embodiments the rotary position sensor is a rotary potentiometer. In embodiments the rotary position sensor is a rotary optical encoder. An example of a sensor is a Panasonic rotary potentiometer (part number E VA-JQLR15B14, Matsushita Electric (Panasonic U.S.A.), New York, New York, U.S. distributors include DigiKey and Newark Electronics). Alternatively or in addition to measuring displacement with the sensor, the sensor can be used to measure the relative velocity or acceleration of the housing 183 and the second member 181. Furthermore, the sensor can be a velocity sensor or an accelerometer. A device for interpreting the signal from sensor, such as a general purpose computer having a memory, is in electrical communication with electrical connections 202 of the sensor. The computer can further be provided with logic in the memory which can determine relative position, velocity, or acceleration based on the electrical signals sent by the sensor, and can store data representative of one or more of these parameters. In addition to the variable resistance sensors, other sensing devices may alternatively be used, including variable inductance or variable capacitance sensors, optical encoders, flex or bend sensors etc. and are all within the spirit and scope of the present invention, and the sensor can be used to measure relative velocity or acceleration as well as relative position between a second member and a housing.

Magnetically actuated motion control devices according to the present invention are useful in many applications. Exemplary applications for the present invention device are for the control of rotary motion automobile, truck and other vehicle applications.

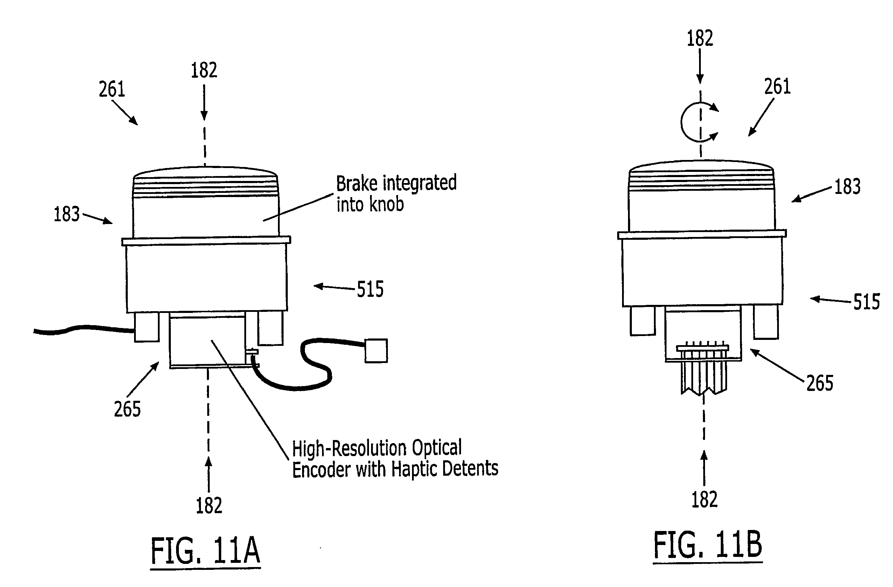

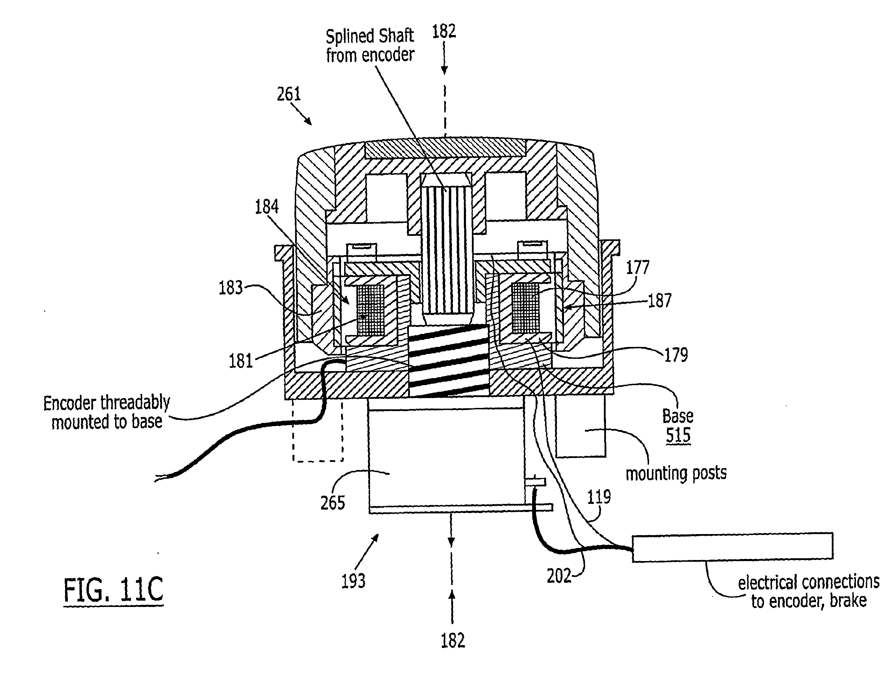

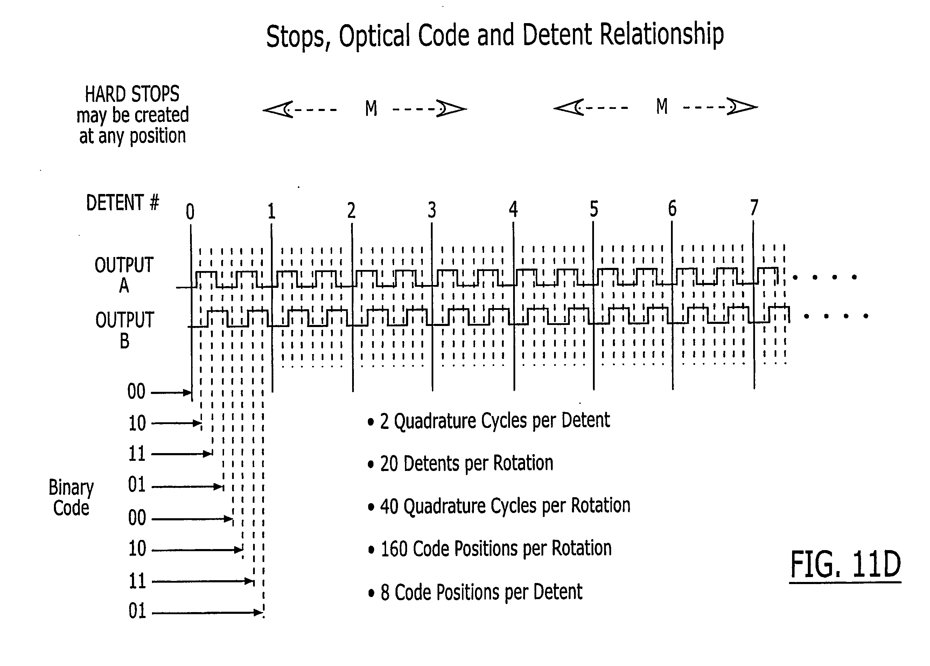

The rotary motion control device of the invention may be utilised in the area of haptics, to provide tactile force feedback to an operator. FIG.2 illustrates a force-feedback steering wheel 261 that uses a rotary motion control damper 263. Such a device can also be used in "steer-by-wire" and other haptic control mechanisms on vehicles such as cars, trucks or industrial jitneys and forklifts. The present invention can also be used in computer games as a force-feedback rotary steering wheel that is responsive to virtual action in a game. In the example shown in FIG.2, the damper 263 is coupled to a rotary position sensor 265 so that the damping can be coupled to the position of the steering wheel. In the example shown in FIG. 11,a force-feedback rotary control knob wheel 261 can be provided with programmable end stops, with a rotary position sensor sensing the position of the rotor with an end stop of the control knob then being generated by generating a magnetic field to stop further knob rotation in the rotating direction.

The present invention can also be used as a small controllable friction brake inside computer pointing devices, such as a computer mouse 267 as shown in FIG. 3. The mouse 267 includes a mouse ball 269 that is in rolling contact with a y-drive pinion 271 and an x-drive pinion 273. The drive pinions 271, 273 are each respectively coupled to a y-encoder wheel 275 and an x-encoder wheel 277 with rotary motion control devices 279. Each encoder wheel 275, 277 is positioned so as to rotate through an encoder sensor 280. The rotation of an encoder wheel is sensed by a respective encoder, which sends an electrical signal representing the movement of the mouse ball 273 in an x-y plane, which passes through pinions 271, 273.

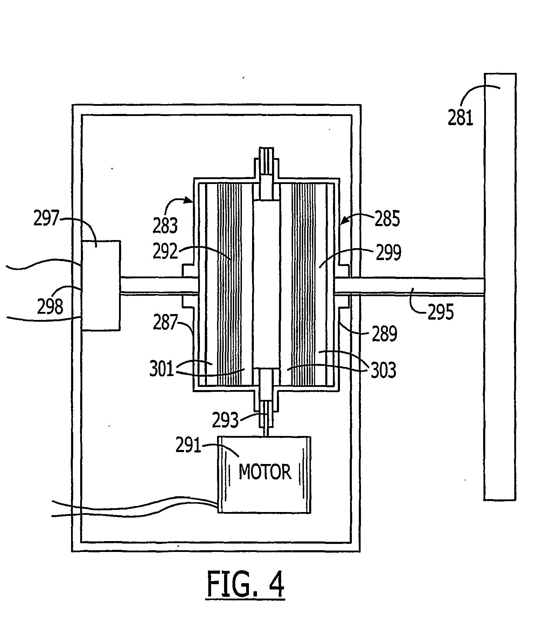

The invention can also be used to provide an active force feedback steering wheel 281 as shown in FIG. 4. In this application a pair of rotary motion control device clutches 283, 285, are used to selectively couple the steering wheel 281 to either clockwise or counter-clockwise rotating housings 287, 289. In a clutch arrangement, the stator and the housing are each rotatable, and are rotatable relative to one another. A motor 291 is coupled to clockwise and counter-clockwise housings 287, 289 by a pinion drive 293. A shaft 295 extending from the steering wheel passes through the housing 289 and is coupled to stators 297, 299 of the rotary motion control device clutches 283, 285, respectively. The shaft 295 can include bearings or other similar structures where the shaft passes through the housings 287, 289, to permit relative rotational movement between the shaft and the housings. A rotary position sensor 298 is coupled to the end of shaft 295 to detect the rotation of the steering wheel 281. The stators 297, 299, provide friction damping in the clockwise and counter-clockwise directions with housing circular band contact surfaces 301, 303. Thus, the steering wheel 281 can actually be forced to turn with a prescribed amount of force in either direction with the ultimate driving source being a simple single direction motor 291.

Embodiments of a magnetically actuated motion control device according to the present invention include bearing components that contact the components of the magnetically controlled motion control device, e.g., a housing and a second member, and provide smooth relative motion between the components when the motion control device is in its off-state.

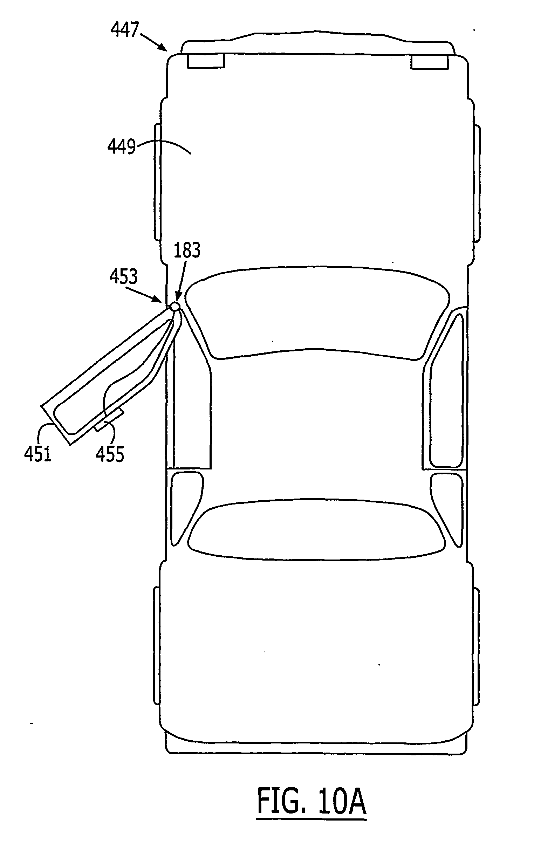

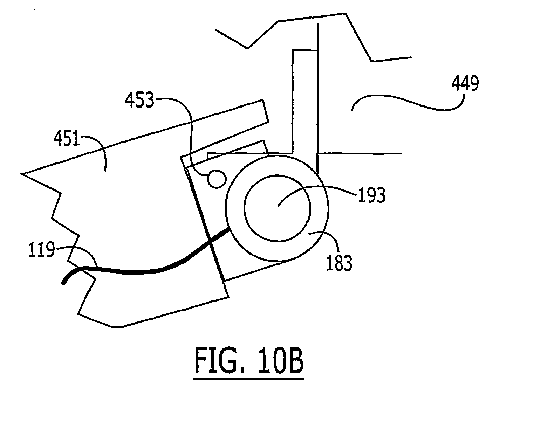

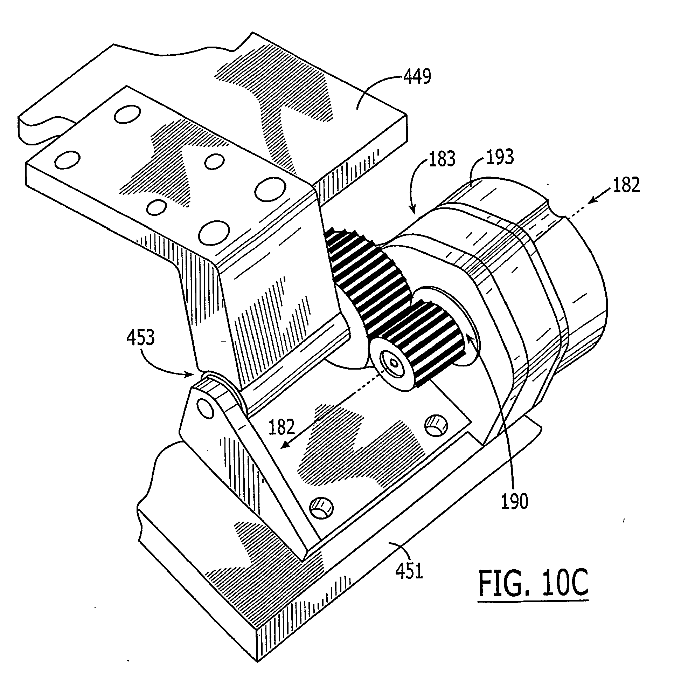

As explained earlier, the magnetic field generators, e.g., coils can be mounted to either the housing or the second member with the other of the housing or the second member including a flexible circular band for magnetically controllable friction engagement. An example of a situation in which it may be important to provide smooth movement between the housing and the second member is when an embodiment of the present invention is used as a locking mechanism in a hinged vehicle door. In the example shown in FIG. 10, a car 447 includes a body 449 and a door 451 that swings on a hinge 453 relative to the body 449.. An operator can lock the door 451 into any position by activating a switch 455 which energizes the magnetic field generator to cause the second member and the housing to press against one another together, thus holding the door in position. The rotary motion control device is utilized to hold the vehicle door in position and control the motion of the door relative to the vehicle body with magnetic actuation of the circular band towards the stator. The rotary motion control device is utilized to control the rotating motion of a hinge. The shaft 190 can be directly coupled and connected to the rotating hinge members or indirectly coupled, such as with meshing gears as shown in FIG. 10C. A rotary position sensor is preferably utilized to sense the rotating motion of the hinge and the control device.

The invention includes a magnetically actuated motion control device. The magnetically actuated motion control device is preferably comprised of a first housing member defining a cavity with the first housing member including a movable flexible finger circular band. The magnetically actuated motion control device is preferably comprised of a second member positioned within the first housing member cavity with the first housing member movable relative to the second member with a magnetic field generator located on the second member. The magnetic field generator causes the movable flexible circular band to press against the second member to produce frictional damping. In a preferred embodiment the second member is a stator having a center axis with the stator and the first housing being relatively rotatable around the central axis. Preferably the housing encircles the second member with the housing relatively rotatable around the second member. Preferably the movable flexible circular band has a tab end for attachment with the first housing member. In an embodiment the movable flexible circular band has a free end and a distal attached end which is attached to the first housing member, preferably with the distal attached end comprised of a tab end. In an embodiment the movable flexible circular band has a first tab end and a distal second tab end.

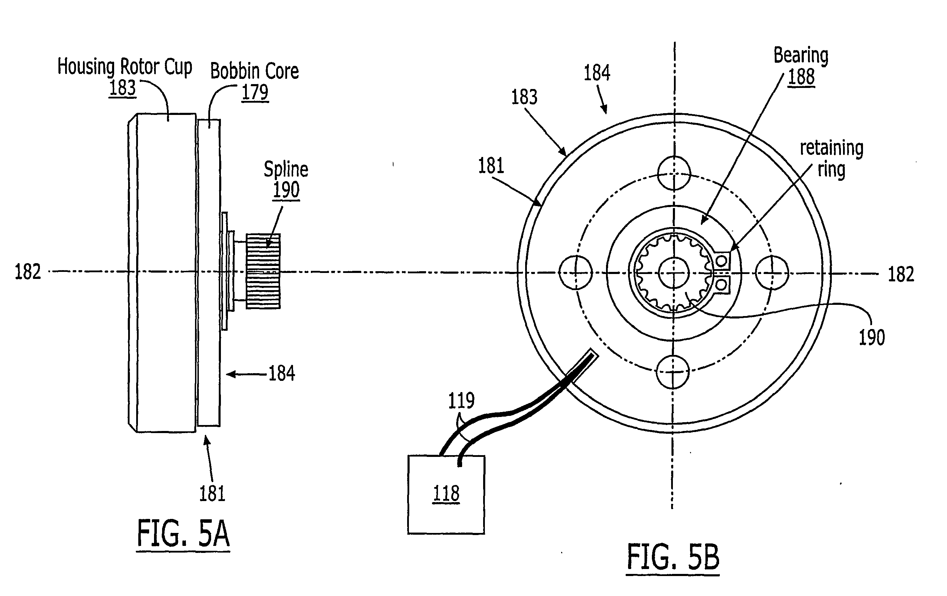

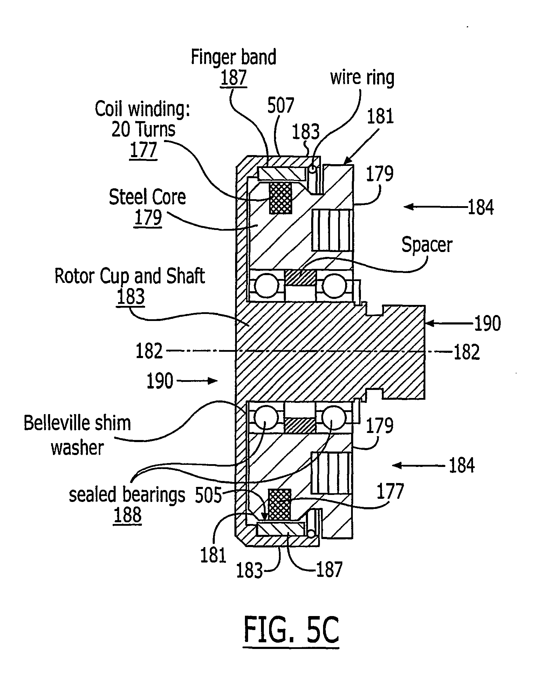

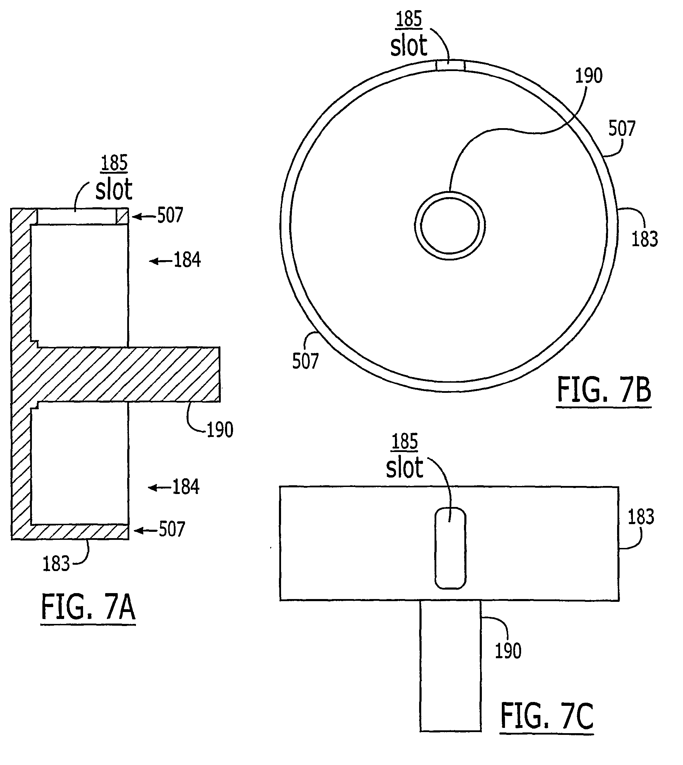

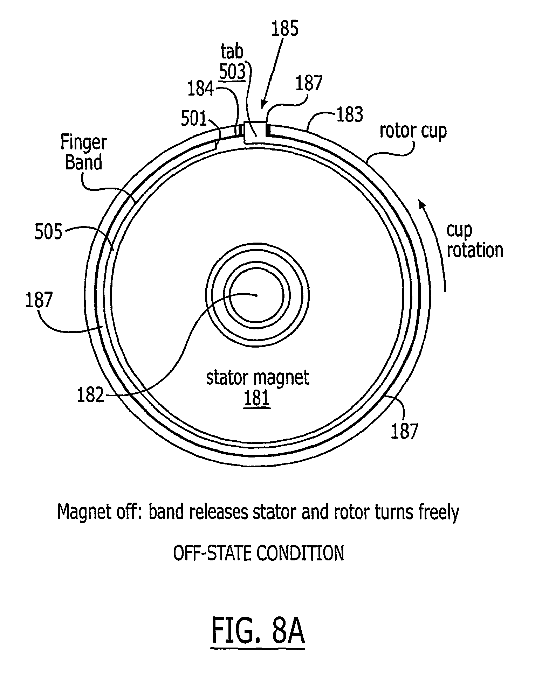

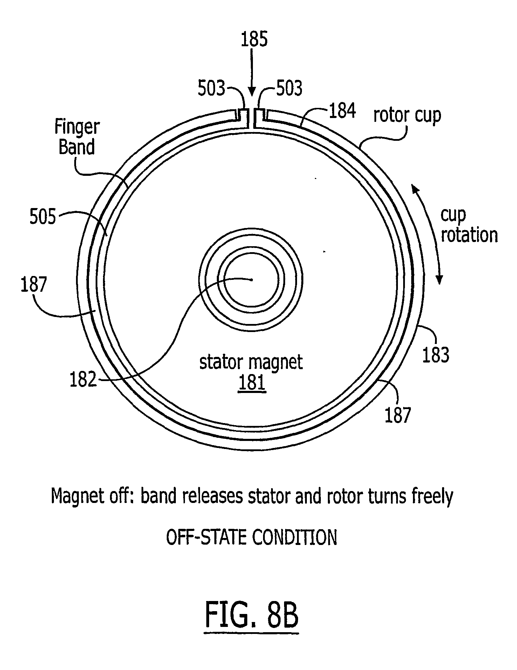

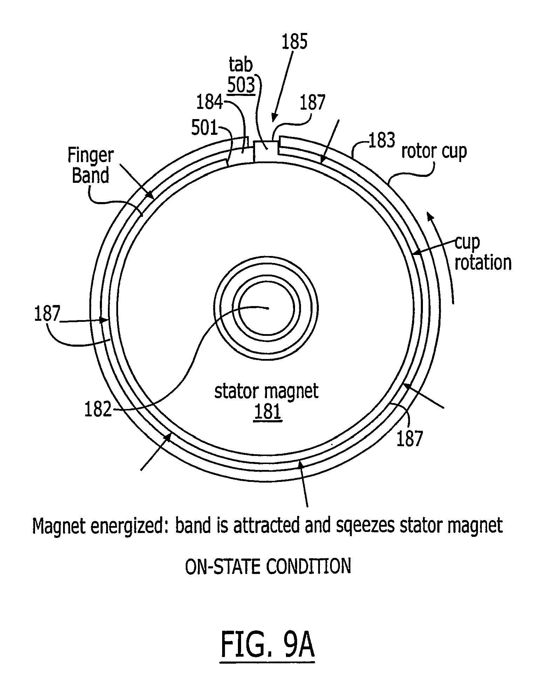

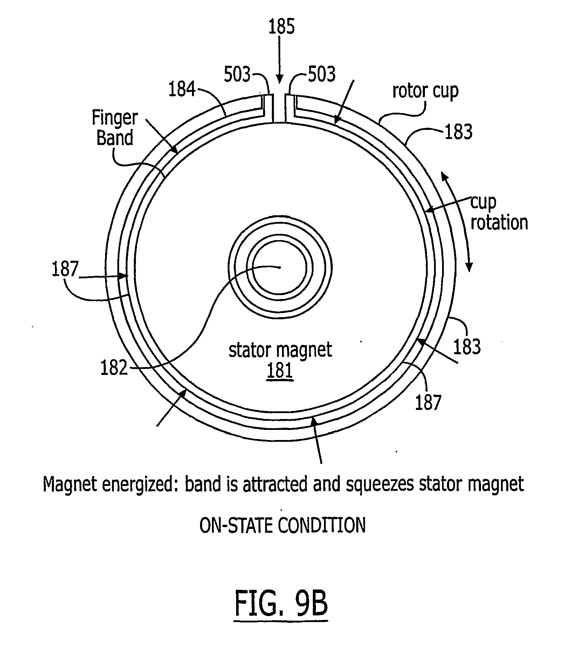

The magnetically actuated motion control device is preferably comprised of a first housing member 183 defining a cavity 184 with the first housing member including a movable flexible circular band 187. The magnetically actuated motion control device is preferably comprised of a second member 181 positioned within the first housing member cavity 184 with the first housing member 183 movable relative to the second member with a magnetic field generator 177 located on the second member. Preferably the second member 181 is a magnetic field generator stator formed from a center bobbin 179 and a coil 177 wrapped around the bobbin to produce a magnetic field when a current is supplied to the coil from a current source 118. The magnetic field generator causes the movable flexible circular band 187 to press against the second member 181 to produce frictional damping. In a preferred embodiment the second member 181 is a stator having a center axis 182 with the stator and the first housing being relatively rotatable around the center axis 182. Preferably the housing 183 encircles the second member 181 with the housing rotatable around the second member. In an embodiment the movable flexible circular band 187 has a free end 501 and a distal attached end 503 which is attached to the first housing member 183. Preferably the first housing member includes a slot opening 185. In a preferred embodiment the movable circular band 187 extends through first housing member opening 185 with at least one tab end 503. Preferably the movable circular band is a circular band 187 that encircles the stator 181. In an embodiment the movable circular band circular band 187 has a free end 501 and a distal second end 503. Preferably the distal second end 503 is comprised of a tab, with the distal second end tab extending through the opening slot 185. As shown in FIG. 8A and 9A such a motion control device with a free end 501 and a tab end 503 is preferred when the motion control device is intended to control motion in one direction of rotation. As shown in FIG. 8B and 9B such a motion control device with a first tab end 503 and a second tab end 503 is preferred when the motion control device is intended to control motion in two directions of rotation. Preferably the end tab is contained in the opening slot in which it is movable. The circular band 187 rotates along with the housing 183. Preferably the circular band circular band 187 rotates with the circular cup housing 183, with the circular band pulled around by the housing, such as by housing slot 185. In preferred embodiments such as shown in FIG. 5-12 the circular band 187 is magnetic and the rotor cup housing 183 with rotor shaft 190 is preferably nonmagnetic. Preferably the band circular band encircles at least 70%, more preferably at least 80%, more preferably at least 90%, most preferably at least 95% of the outer circumference of stator 181. An air gap between the movable circular band 187 and the second member 181 when a magnetic field is not generated by the magnetic field generator allows for relative movement between the first housing 183 and the second member 181 without frictional damping and contact between the housing circular band and the second member. Preferably the movable circular band 187 encircles the second member 181 with a gap 505 between the movable circular band and the second member when a magnetic field is not generated by magnetic field generator stator coil. Preferably the first housing member is comprised of a rotor cup having a rotor cup outer perimeter 507 and a rotor cup inner shaft 190, with the second member 181 received in cavity 184 between the rotor cup outer perimeter 507 and the rotor cup inner shaft 190. Preferably the first housing member 183 has an inner shaft 190 and a cavity 184 for receiving the second member 181 with the second member stator received in the cavity between the circular band 187 and the inner shaft. Preferably the first housing member inner shaft 190 is separated from the second member 181 with a bearing 188. Preferably the movable circular band 187 is a circular band that substantially encircles the outer circumference stator 181. The second member circular stator outer circumference provides for contact with the circular band 187 of housing 183.

The invention includes a magnetically actuated motion control device comprised of a first housing member including a cavity formed therein and including a movable circular band; and a second member disposed in the cavity; and at least one magnetic field generator mounted to cause the movable circular band to be displaced toward the second member and thereby squeeze the second member. In a preferred embodiment the first housing member has an outer perimeter and includes a shaft, with the cavity for receiving the second member between the outer perimeter and the shaft.

First housing member 183 has an outer perimeter 507 and an inner shaft 190 that provides a cavity 184 for receiving second member circular stator 181. A movable circular band 187 frictionally engages the second member stator 181 when it is magnetically attracted by the magnetic field generated by the stator. Preferably the first housing member is a rotor cup, preferably a rotor cup with a rotor cup inner shaft. Preferably the first housing member inner shaft 190 is separated from the second member stator 181 with at least one bearing 188. The stator 181 has a center axis 182 and preferably includes a center steel bobbin 179 and a wound coil 177 for generating the magnetic field. The generated magnetic field pulls the circular band 187 into contact with the circular stator outer circumference.

The invention includes a method of controlling relative motion between a first housing and a second member, with the housing having a circular band movable relative to the second member, and the housing defining a cavity in which the second member is located. The invention includes generating a magnetic field and pressing the circular band against the second member in accordance with the generated magnetic field.

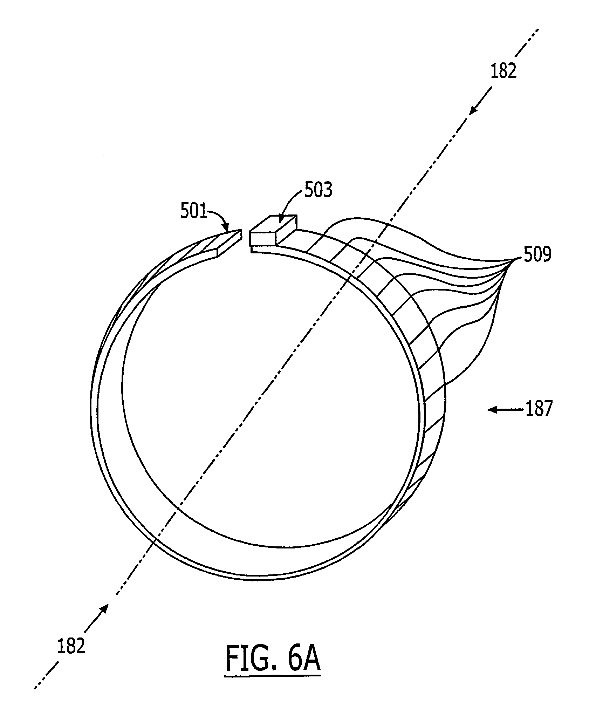

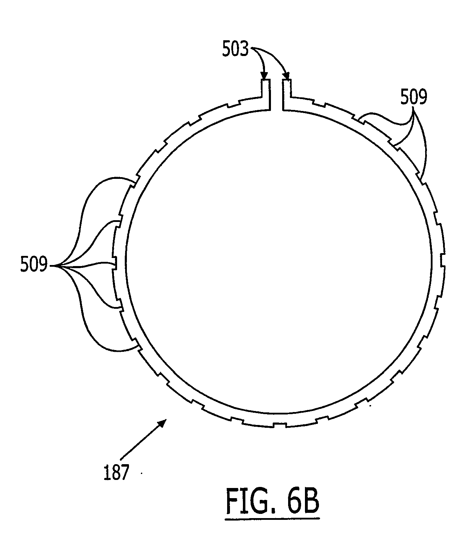

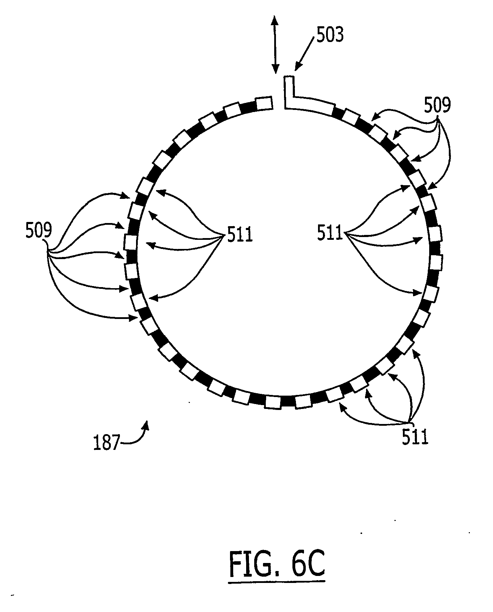

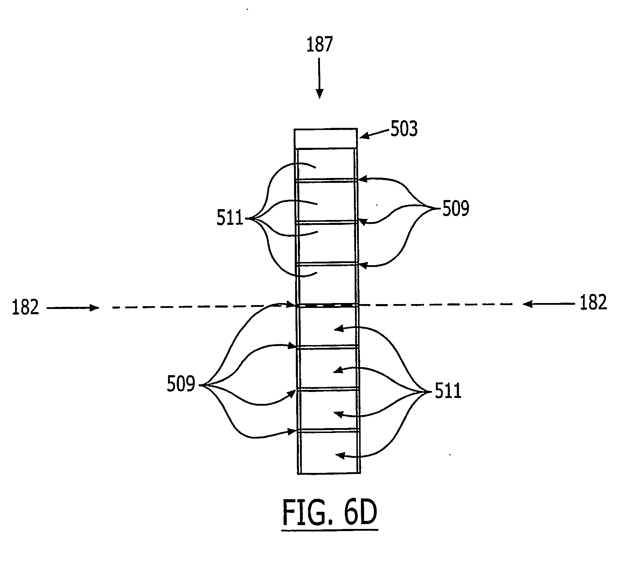

The invention includes a method of controlling relative motion between a housing 183 having a circular band 187 and a second member 181, with the second member movable relative to the housing and circular band, and the housing 183 defining a cavity 184 in which the second member is located. The invention includes generating a magnetic field and pressing the circular band 187 against the second member 181 in accordance with the generated magnetic field. Preferably the second member 181 is a circular stator including a bobbin 179 and a coil 177.Preferably the housing 183 includes a shaft 190. Preferably the circular band 187 is magnetically permeable wherein generating a magnetic field includes supplying a current from a current source 118 to the coil to attract the circular band towards the circular stator. The circular band 187 is formed from a material attracted by magnetic fields, and is able to carry a magnetic flux. The method includes rotating the circular stator relative to the housing around with a bearing between the stator and the shaft. Pressing the circular band 187 against the second member includes collapsing the circular band around the circular stator. Preferably the circular band 187 is a flexible circular band with flex links. In a preferred embodiment the circular band 187 is a notched circular band with flex link notches 509 along its outer circumference, preferably with the circular band flex link notches 509 in parallel alignment with the central axis 182 and normal to the direction of rotation. As shown in FIG. 6A-B, circular band 187 includes outer circumference flex link notches 509 in parallel alignment with central axis 182 and normal to the direction of rotational motion to provide for circular band flexibility and frictional engagement of the circular band with the second member upon generation of the magnetic field. In a preferred embodiment the invention includes providing a circular band 187 with a plurality of flex links 509 spaced along the circumference of circular band 187. In embodiments as shown in FIG. 6C-D, the circular band circular band 187 includes flex links 509 between magnetic circular band segments 511. Magnetic circular band segments 511 are preferably steel segments that are drawn inward toward the second member upon generation of the magnetic field, with the plurality of magnetic circular band segments 511 linked together with the flex links 509 to form the magnetically actuatable movable circular band 187. As shown in the view of magnetically actuatable movable circular band 187 in FIG. 6D, the flex links 509 form a web belt to contain and position the plurality of magnetic circular band segments 511, such as the circular band circular band formed from an a flexible plastic belt with magnetically attractable steel magnetic circular band segments 511 attached thereto between flex links 509, such as with the circular band segments 511 adhered thereto, snapped into place, or molded into the belt. In an embodiment the circular band links 509 comprise a molded plastic belt with sockets that accept the magnetic circular band segments 511 and contain and position the magnetic steel circular band segments 511 around the circular band 187 to form the magnetically actuatable movable circular band which frictionally engages the second member upon generation of the magnetic field.

The invention includes a system with a magnetically actuated motion control device with a circular band 187 frictionally engaging a circular stator 181 to control a rotational motion of the system. The magnetically actuated motion control device is coupled to a shaft with a wheel, with the circular stator or the housing being rotatable relative to the shaft. In a preferred embodiment the wheel and shaft is comprised of a control knob. Preferably the system includes a rotational sensor 193 that tracks rotation. Based on the sensor output a magnetic field is generated by the stator 181 to move circular band 187 to make a rotation end stop.

The invention includes a vehicle 447 including a body 449 and a door 451. The door 451 is attached by hinge 453 to the body frame 449. The invention includes a magnetically actuated motion control device housing 183 mounted between the door 451 and the body 449 to magnetically control a movement of the door 451 relative to the body 451. A second member stator 181 is received in a cavity 184 inside housing 183. Rotary position sensor 193 is mounted with the housing 183 to sense rotation movement of the device and the hinge. The second member stator 181 has a center axis 182, with the stator and said first housing 183 being relatively rotatable around the central axis.

The invention includes a vehicle 447 a body frame 449 and a door 451. The door 451 is attached by a hinge 453 to the body. The invention includes a magnetically actuated motion control device comprising a first housing member 183 defining a cavity 184. The first housing member 183 includes a movable circular band 187 and a second member 181 is positioned within the first housing member cavity 184, with the second member 181 movable relative to the first housing member 183 and includes a magnetic field generator which causes the movable circular band 187 to press against the second member 181 to produce frictional damping with said magnetically actuated motion control device mounted to control a positioning of the door 451 relative to the body 449. Preferably the movable circular band 187 is a circular band that substantially encircles the second member. Preferably the second member is a stator having a center axis 182, and includes a bobbin 179 and a coil 177, preferably with the stator being a circular stator with an outer circumference.

The invention includes a body frame 449 and a door 451 with the door being attached by a hinge 453 to the body frame 449 and a magnetically actuated motion control device with a first housing member 183 defining a cavity 184. The first housing member 183 includes a movable circular band 187 and a second member 181 positioned within said first housing member cavity 184, with the second member movable relative to said first housing member. The second member 181 includes a magnetic field generator with the magnetic field generator causing the movable circular band 187 to press against the second member 181 to produce frictional damping with the magnetically actuated motion control device mounted to control a positioning of the door 451 relative to the body frame 449.

The invention includes a magnetically actuated rotary motion control device comprising a first housing member 183 including a cavity 184 formed therein and including a movable circular band 187 with a plurality of flex links 509. The magnetically actuated rotary motion control device includes a second member 181 disposed in the cavity 184 and at least one magnetic field generator mounted to cause said movable circular band 187 to be displaced toward said second member 181 and thereby squeeze said second member. Preferably the second member 181 is comprised of a stator that includes the at least one magnetic field generator, with the stator 181 having a coil 177 wound around a center bobbin 179 such that a current through the coil 177 generates the magnetic field that attracts movable circular band 187 toward second member stator 181. Preferably the movable circular band 187 flex links 509 are spaced along the length of the circular band. Preferably the stator 181 is a circular stator with the stator having an outer circumference and the movable circular band 187 encircles at least seventy percent of the second member stator outer circumference.

The invention includes a magnetically actuated rotary motion control device comprising a first housing member 183 including a cavity 184 formed therein and including a movable circular band 187. The magnetically actuated rotary motion control device includes a second member 181 having an outer circumference and is disposed in the cavity 184 with the movable circular band 187 encircling at least seventy percent of the second member outer circumference. The magnetically actuated rotary motion control device includes at least one magnetic field generator mounted to cause said movable circular band 187 to be displaced toward said second member outer circumference and thereby squeeze said second member 181. Preferably the second member 181 is comprised of a stator that includes the at least one magnetic field generator, with the stator 181 having a coil 177 wound around a center bobbin 179 such that a current through the coil 177 generates the magnetic field that attracts movable circular band 187 toward second member stator 181. Preferably the movable circular band encircles at least eighty percent of the second member outer circumference. Preferably the movable circular band encircles at least ninety percent of the second member outer circumference. Preferably the movable circular band encircles at least ninety five percent of the second member outer circumference. Preferably the movable circular band 187 is a circular band with flex links 509.

The invention includes a haptic system comprising a control knob 261 that provides tactile force feedback to an operator with programmable virtual hard end stops. As shown in FIG. 11A-D the magnetically actuated rotary motion control device provides a haptic control knob 261 with tactile force feedback of the rotating control wheel knob including programmable virtual hard stops. The control knob system includes a first member movable circular band 187 and a second member base 515 with said control knob 261 rotatable relative to the base. The control knob system includes a rotational sensor 265 positioned to sense a positional characteristic of said rotatable control knob 261 relative to the base 515. The base 515 includes a circular stator 181 for generating a magnetic field to cause the movable circular band 187 to press against the second member stator base to produce frictional damping to inhibit rotation of the control knob 261 relative to the stationary base. Preferably the stator generates the magnetic field based on a positional characteristic of the rotating control knob 261 sensed by sensor 265. Preferably the sensor 265 is comprised of an optical encoder, preferably a high resolution optical encoder with a resolution of at least 100 code positions per rotation (complete turn of 360 degrees), preferably at least 150 code positions per rotation, such as high resolution miniature optical encoders Grayhill Inc. Series 63Q and 63T(Grayhill, Inc., 561 Hillgrove Avenue, LaGrange, IL 60525-5997, USA). As shown in FIG. 11, the sensor 265 senses the rotational position and rotational motion of the control knob 261, with a current controllably supplied to the coil 177 to generate a magnetic field that draws the first member circular band 187 into contact with the second member stator 181 in order to provide haptic feedback relating to the rotation of the control knob 261 relative to the base, including detents and hard stops of the control knob.

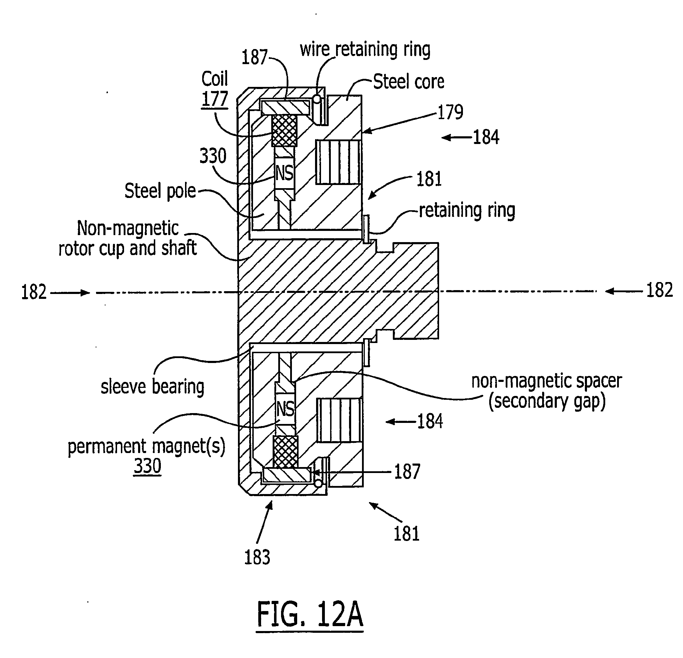

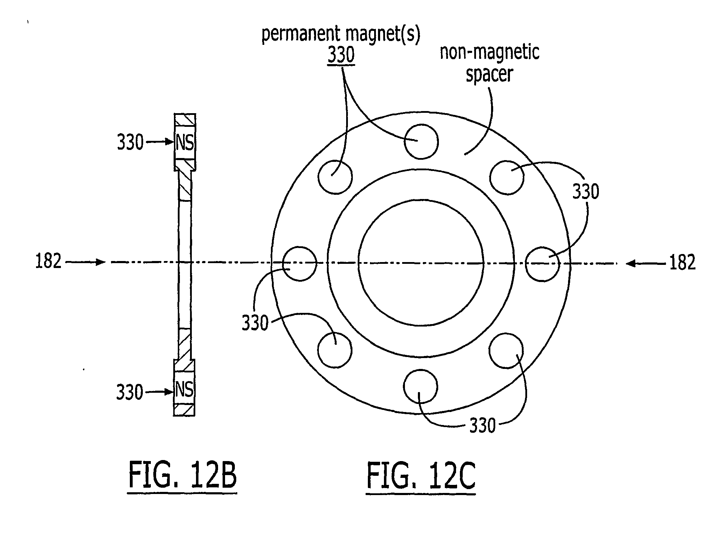

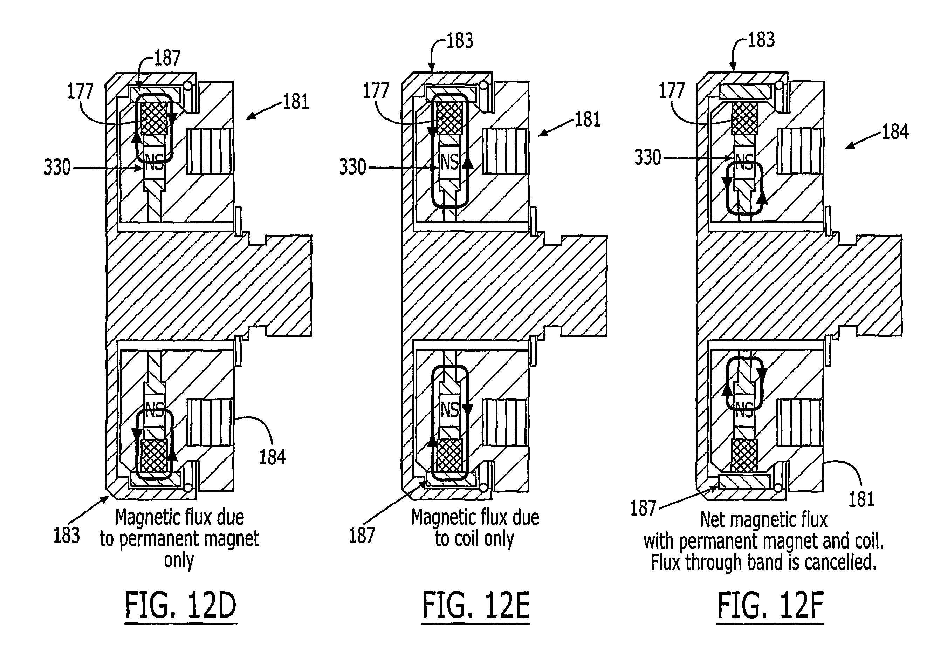

The invention includes a magnetically actuated rotary motion control device. As shown in FIG. 12, the magnetically actuated rotary motion control device includes a first housing member 183 including a cavity 184 formed therein and including a movable circular band 187. The magnetically actuated rotary motion control device includes a second member 181 disposed in the cavity 184. The second member 181 including a permanent magnet 330. The permanent magnet generates an attractive magnetic field for attracting said circular band movable circular band 187 into frictional contact with said second member 181 to inhibit rotation between said first member 183 and said second member 181. The magnetically actuated rotary motion control device preferably includes an adjustable magnetic field generating coil 177, with the adjustable magnetic field generating coil 177 generating an adjustable magnetic field that cancels the permanent magnet attractive magnetic field to provide for retraction of the circular band movable circular band 187 and inhibiting its frictional contact with said second member 181. In an embodiment the permanent magnet 330 is a ring magnet, with the ring magnet in alignment with the circular band 187. In an embodiment a plurality of permanent disk magnets 330 are spaced around a non-magnetic spacer ring, with the spacer ring in alignment with the circular band 187. Permanent magnets 330 provide for having the attractive magnetic field, and therefore the damping force, applied most of the time with only short instances of turning the damping off. The permanent magnets are positioned and utilized in the rotary motion control damper so that the damper is in its on-state with the first member housing movable circular band 187 pressing against the second member 181 when no current is applied to the electromagnetic coil 177 such as shown in FIG. 12A and 12D. As shown in FIG. 12F the electro-magnetic coil 177 serves to cancel the field of the permanent magnets as current is applied to progressively turn the damper off. FIG. 12D shows the magnetic field and magnetic flux due to the permanent magnets only. FIG. 12E shows a magnetic flux due to the electro-magnetic coil only. FIG. 12F shows the net magnetic flux with the permanent magnet flux and the coil magnetic flux through the circular band movable circular band 187 cancelled. Preferably the second member 181 is a circular stator with the stator having an outer circumference and the movable circular band 187 is a circular band and encircles at least seventy percent of the second member stator outer circumference. In a preferred embodiment the movable circular band 187 includes a plurality of flex links 509. As shown in FIG. 12, the second member 181 includes a steel core, a steel pole, and a secondary gap non-magnetic spacer. The first member housing 183 includes a non-magnetic rotor cup and shaft, with the first member housing 183 and the second member 181 relatively rotatable about a center axis 182 with a sleeve bearing, with the assembly retained together with an outer large circumference wire retaining ring and an inner small circumference retaining ring. The permanent magnet 330 is preferably a plurality of permanent disk magnets positioned in a non-magnetic spacer disk, with plurality of spaced apart permanent magnets generating the attractive magnetic field for attracting said circular band movable circular band 187 into frictional contact with said second member 181. In an alternatively preferred embodiment the permanent magnet 330 is a permanent ring magnet which generates the attractive magnetic field for attracting said circular band movable circular band 187 into frictional contact with said second member 181. The permanent magnet 330 attracts the movable circular band 187 into frictional contact to inhibit rotation between the first member housing 183 and the second member 181. The coil 177 provides a means for canceling this attraction of the movable circular band 187 to allow for rotation between the first member housing 183 and the second member 181.

The present invention has been described with reference to exemplary embodiments. However, it will be readily apparent to those skilled in the art that it is possible to embody the invention in specific forms other than as described above without departing from the scope of the invention, which is given by the appended claims. The exemplary embodiments are illustrative and should not be considered restrictive in any way.

## Claims

1. A magnetically actuated motion control device, comprising a first housing member (183) defining a cavity (184), said first housing member including a moveable circular band (187), a second member (181) position within said first housing member cavity (189), said first housing member (183) movable relative to said second member (181), and a magnetic field generator (177) located on said second member, said magnetic field generator (171) causing said movable circular band (187) to press against said second member (181) to produce frictional damping **characterised in that** said first housing member (183) includes an opening, and wherein said movable circular band (187) extends through said first housing member opening, whereby said circular band (181) can collapse around said second member.

2. A device according to Claim 1, wherein the opening is a first slot (185).

3. A device according to Claim 2, said movable circular band (187) having a tab end (503), said tab end (503) extending through said first slot (185).

4. A device according to Claim 3, wherein said movable circular band has a second tab end (503), said second tab end (503) extending through said first slot (185).

5. The magnetically actuated motion control device according to Claim 1 wherein said movable circular band (187) is comprised of a circular band with a plurality of flex links (509).

6. The magnetically actuated motion control device of Claim 1, wherein said second member (181) has an outer surface and the movable circular band (187) has an inner surface and wherein the device further comprises a friction increasing material between said outer surface and said inner surface.

7. The magnetically actuated motion control device of Claim 1, wherein a lubricant is provided between said second member (181) and the housing (183).

8. A method of controlling relative motion between a first housing member (183) having a circular band (187) and a second member (181), said second member (181) and said housing (183) relatively moveable, the housing (183) defining a cavity (184) in which the second member (181) is located, the method comprising the steps of:
generating a magnetic field and
pressing said circular band (187), against the second member (181) in accordance with said generated magnetic field **characterised in that** pressing said circular band (187) against said second member (181) includes collapsing said circular band (187) around said second member (181).

## Patentansprüche

1. Magnetisch betätigte Bewegungssteuer-Vorrichtung, umfassend einen ersten Gehäusekörper (183), der einen Hohlraum (184) bildet und ein bewegliches, kreisrundes Band (187) aufweist sowie einen zweiten Körper (181), der in dem ersten Gehäusekörper-Hohlraum (189) angeordnet ist, wobei der erste Gehäusekörper (189) in Bezug auf den zweiten Körper (181) beweglich ist und ein Magnetfeld-Generator (177) auf dem zweiten Körper angeordnet ist und dieser Magnetfeld-Generator (177) bewirkt, daß das bewegliche kreisrunde Band (187) gegen den zweiten Körper (181) drückt, um durch Reibung Dämpfung zu erzeugen, **dadurch gekennzeichnet, daß** der erste Gehäusekörper (183) eine Öffnung aufweist und sich das bewegliche, kreisrunde Band (187) durch diese erste Gehäusekörper-Öffnung erstreckt, wodurch sich das kreisrunde Band (187) rund um den zweiten Körper legen kann.

2. Vorrichtung nach Anspruch 1, **dadurch gekennzeichnet, daß** die Öffnung ein erster Schlitz (185) ist.

3. Vorrichtung nach Anspruch 2, **dadurch gekennzeichnet, daß** das bewegliche, kreisrunde Band (187) ein Nasenende (503) aufweist, das sich durch den ersten Schlitz (185) erstreckt.

4. Vorrichtung nach Anspruch 3, **dadurch gekennzeichnet, daß** das bewegliche, kreisrunde Band ein zweites Nasenende (503) aufweist, das sich durch den ersten Schlitz (185) erstreckt.

5. Magnetisch betätigte Bewegungssteuer-Vorrichtung nach Anspruch 1, **dadurch gekennzeichnet, daß** das bewegliche, kreisrunde Band (187) ein kreisrundes Band mit vielen flexiblen Gelenken (509) bildet.

6. Magnetisch betätigte Bewegungssteuer-Vorrichtung nach Anspruch 1, **dadurch gekennzeichnet, daß** der zweite Körper (181) eine äußere Oberfläche aufweist, und das bewegliche, kreisrunde Band (187) mit einer inneren Oberfläche versehen ist, und daß die Vorrichtung des weiteren zwischen der äußeren Oberfläche und der innen Oberfläche mit einem Reibung vergrößernden Material versehen ist.

7. Magnetisch betätigte Bewegungssteuer-Vorrichtung nach Anspruch 1, **dadurch gekennzeichnet, daß** zwischen dem zweiten Körper (181) und dem Gehäuse (183) ein Schmiermittel vorgesehen ist.

8. Verfahren zur Steuerung der Relativbewegung zwischen einem ersten Gehäusekörper (183) mit einem kreisrunden Band (187) und einem zweiten Körper (181), und der zweite Körper (181) sowie das Gehäuse (183) relativ beweglich sind und das Gehäuse (183) einen Hohlraum (185) begrenzt, in dem der zweite Körper (181) angeordnet ist, wobei das Verfahren die Schritte umfaßt: Erzeugen eines Magnetfeldes und Pressen des kreisrunden Bandes (187) gegen den zweiten Körper (181) gemäß dem erzeugten Magnetfeld, **dadurch gekennzeichnet, daß** zu dem Pressen des kreisrunden Bandes (187) gegen den zweiten Körper (181) das Herumlegen des kreisrunden Bandes (187) um den zweiten Körper (181) gehört.

## Revendications

1. Dispositif de commande de mouvement à actionnement magnétique, comprenant un premier élément de logement (183) définissant une cavité (184), ledit premier élément de logement comprenant une bande circulaire mobile (187), un second élément (181) positionné à l'intérieur de ladite cavité de premier élément de logement (189), ledit premier élément de logement (183) étant mobile par rapport audit second élément (181), et un générateur de champ magnétique (177) disposé sur ledit second élément, ledit générateur de champ magnétique (171) amenant ladite bande circulaire mobile (187) à appuyer contre ledit second élément (181) pour produire un amortissement par frottement, **caractérisé par le fait que** ledit premier élément de logement (183) comprend une ouverture, et ladite bande circulaire mobile (187) s'étendant à travers ladite ouverture de premier élément de logement, ce par quoi ladite bande circulaire (187) peut s'affaisser autour dudit second élément.

2. Dispositif selon la revendication 1, dans lequel l'ouverture est une première fente (185).

3. Dispositif selon la revendication 2, ladite bande circulaire mobile (187) ayant une extrémité de languette (503), ladite extrémité de languette (503) s'étendant à travers ladite première fente (185).

4. Dispositif selon la revendication 3, dans lequel ladite bande circulaire mobile a une seconde extrémité de languette (503), ladite seconde extrémité de languette (503) s'étendant à travers ladite première fente (185).

5. Dispositif de commande de mouvement à actionnement magnétique selon la revendication 1, dans lequel ladite bande circulaire mobile (187) est composée d'une bande circulaire avec une pluralité de liaisons souples (509).

6. Dispositif de commande de mouvement à actionnement magnétique selon la revendication 1, dans lequel ledit second élément (181) a une surface externe et la bande circulaire mobile (187) a une surface interne, et le dispositif comprenant en outre un matériau d'augmentation du frottement entre ladite surface externe et ladite surface interne.

7. Dispositif de commande de mouvement à actionnement magnétique selon la revendication 1, dans lequel un lubrifiant est disposé entre ledit second élément (181) et le logement (183).

8. Procédé de commande d'un mouvement relatif entre un premier élément de logement (183) ayant une bande circulaire (187) et un second élément (181), ledit second élément (181) et ledit logement (183) étant mobiles l'un par rapport à l'autre, le logement (183) définissant une cavité (184) dans laquelle le second élément (181) est disposé, le procédé comprenant les étapes consistant à :
- générer un champ magnétique et
- appuyer ladite bande circulaire (187) contre le second élément (181) en fonction dudit champ magnétique généré, **caractérisé par le fait que** l'appui de ladite bande circulaire (187) contre ledit second élément (181) comprend l'affaissement de ladite bande circulaire (187) autour dudit second élément (181).
